# EUROPEAN PATENT SPECIFICATION

(11) **EP 4 108 423 B1**
(45) Date of publication and mention of the grant of the patent: **19.03.2025**
(21) Application number: 22175030.0
(22) Date of filing: 24.05.2022
(51) Int. Cl.: B29C 65/02, B65B 51/30, B65B 9/093

(54) **A TRANSVERSE WELDING ASSEMBLY FOR A FLOW-PACK PACKAGING MACHINE AND FLOW-PACK PACKAGING MACHINE INCLUDING THIS WELDING ASSEMBLY**
QUERSCHWEISSVORRICHTUNG FÜR EINE FLOW-PACK-VERPACKUNGSMASCHINE UND FLOW-PACK-VERPACKUNGSMASCHINE, DIE DIESE SCHWEISSVORRICHTUNG EINSCHLIESST
ENSEMBLE DE SOUDAGE TRANSVERSAL DESTINÉ À UNE MACHINE D'EMBALLAGE DE SACS THERMOSOUDÉS ET MACHINE D'EMBALLAGE DE SACS THERMOSOUDÉS COMPRENANT LEDIT ENSEMBLE DE SOUDAGE

(30) Priority: 25.06.2021 IT 202100016694
(43) Date of publication of application: 28.12.2022
(73) Proprietor: Cavanna S.p.A., 28077 Prato Sesia (NO) (IT)
(72) Inventor: BROLLI, Elio, 28077 Prato Sesia (Novara) (IT); PISTOLESI, Alessandro, 28077 Prato Sesia (Novara) (IT); IOPPA, Lorenzo, 28077 Prato Sesia (Novara) (IT); CAVANNA, Riccardo, 28077 Prato Sesia (Novara) (IT)
(74) Representative: Buzzi, Notaro & Antonielli d'Oulx S.p.A.

(56) References cited:
- DE-A1- 102006 025 849

## Description

### Field of the invention

The present invention refers, in general, to the field of packaging and specifically relates to flow-pack packaging.

More precisely, the invention relates to a transverse welding assembly for a flow-pack packaging machine.

### Description of the prior art

Flow-pack packaging is one of the most widely used systems for packaging of a great variety of products, in particular food products, such as, for example, biscuits, snacks, bars, etc.

In flow-pack packaging systems, a continuous packaging film, typically of plastic material, is unwound from a reel and is folded into an element with a tubular shape that surrounds the products to be packaged and advances in a machine direction together with the flow of products to be packaged. The tubular element of packaging material is closed by a continuous longitudinal weld that joins the opposite longitudinal edges of the packaging film and by transverse welds spaced apart in the machine direction that seal the tubular element at opposite sides with respect to the products.

A horizontal flow-pack packaging machine typically comprises:
- a horizontal conveyor configured to advance a flow of products along a longitudinal direction,
- an unwinding unit configured to feed a continuous packaging film,
- a stationary forming device configured to fold the packaging film in the form of a tubular element that surrounds the products to be packaged,
- a longitudinal welding assembly located downstream of the forming device and configured to weld together opposite longitudinal edges of the packaging film, and
- a transverse welding assembly configured for transversally welding the tubular element formed by the film of packaging material.

The transverse welding assembly may comprise two welding elements that rotate around two axes parallel to each other. This solution has the drawback of a limited contact time between the welding elements and the film of packaging material.

In cases wherein to carry out the transverse welding it is necessary to keep the welding elements in contact with the packaging film for a longer time than it is possible with the rotating welding assemblies, a transverse welding assembly called box-motion is used, comprising a translating base, which is movable alternately along the machine direction between a rearward position and an advanced position and vice versa. The translating base carries two welding elements that are movable relative to each other between an open position and a closed position, in phase with the movement of the translating base.

In a box-motion transverse welding assembly, the reciprocating movement of the translating base is generally obtained starting from a rotary electric motor, connected to a transmission mechanism, for example, a connecting rod and crank, which transforms the rotary motion of the electric motor into an alternative straight movement of the translating base.

DE 10 2006 025849 A1 discloses a transverse welding assembly comprising:
- a stationary support structure,
- a translating base movable with respect to the stationary support structure along a straight direction,
- a transmission mechanism configured to command a reciprocating movement of the translating base along said straight direction between a rear position and an advanced position and vice versa, and
- first and second welding elements, carried by the translating base, and movable with respect to each other between an open position and a closed position in phase with the movement of the translating base.

In transverse box motion welding units there is the problem of ensuring that the translating base moves in the machine direction with a uniform speed (equal to the speed of the packaging film) without instantaneous disturbances introduced by the transmission mechanism.

### Object and summary of the invention

The object of the present invention is to provide a transverse welding assembly for a flow-pack packaging machine that overcomes the problems of the prior art.

According to the present invention, this object is achieved by a transverse welding assembly having the characteristics forming the subject of claim 1.

Preferred embodiments of the invention form the subject of the dependent claims.

The claims form an integral part of the disclosure provided here in relation to the invention.

### Brief description of the drawings

The present invention will now be described in detail with reference to the attached drawings, given purely by way of non-limiting example, wherein:
- Figure 1 is a side view of a transverse welding assembly according to the present invention,
- Figure 2 is a perspective view of the transverse welding assembly of Figure 1,
- Figure 3 is a perspective view on an enlarged scale of the part indicated by the arrow III in Figure 2,
- Figure 4 is a perspective view of the oscillator device indicated by the arrow IV in Figure 3 with a part of the casing removed,
- Figure 5 is a perspective view showing the components indicated by the arrow V in Figure 4,
- Figure 6 is a side view according to the arrow VI of Figure 5, and
- Figure 7 is a graph showing the adjustment of the stroke of the transverse welding assembly according to the present invention.

### Detailed description

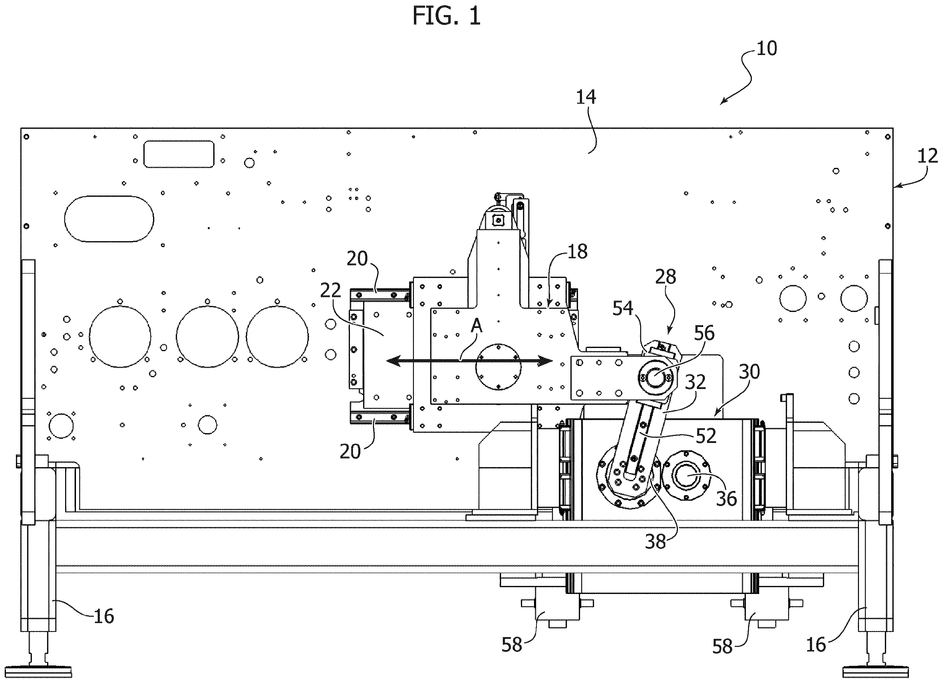

With reference to Figures 1-3, numeral 10 indicates a box-motion transverse welding assembly for a horizontal flow-pack packaging machine. The transverse welding assembly 10 comprises a stationary support structure 12 including a vertical plate 14 and feet 16 resting on the ground.

The transverse welding assembly 10 comprises a translating base 18 movable with respect to the support structure 12 along a horizontal straight direction A. The translating base 18 is movable alternately along the direction A between a rearward position and an advanced position and vice versa. The translating base 18 may be provided with shoes which engage two horizontal guides 20 carried by an adjustment plate 22, which is adjustable in a vertical direction with respect to the vertical plate 14 of the support structure 12. Adjustment in the vertical direction of the adjustment plate 22 allows the transverse welding assembly 10 to be adapted to the thickness of the products to be packaged.

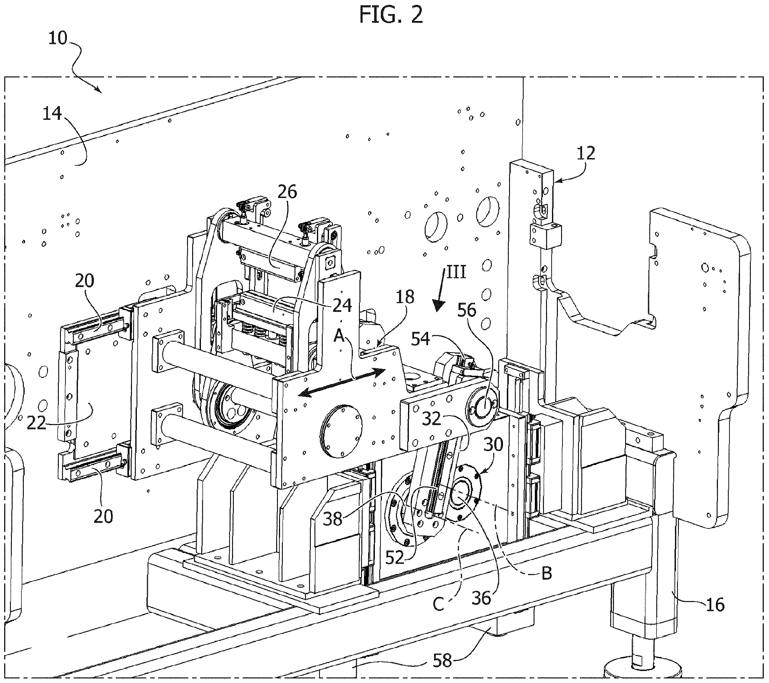

With reference to Figure 2, the translating base 18 carries a first welding element 24 and a second welding element 26 movable relative to each other between an open position and a closed position, in phase with the movement of the translating base 18 in the direction A. Both the welding elements 24, 26 may be movable with respect to the translating base 18 to vary their reciprocal distance between a closed position in which the welding elements 24, 26 are in contact with each other, and an open position in which the welding elements 24, 26 are detached from each other. The movement of the welding elements 24, 26 is controlled by an actuator unit carried by the translating base 18, which may be produced as in the box-motion transverse welding assembly according to the prior art.

With reference to Figures 1-3, the transverse welding assembly 10 comprises a transmission mechanism 28 configured to control the reciprocating movement of the translating base 18 along the direction A between a retracted position and an advanced position, and vice versa.

The transmission mechanism 28 comprises a cam oscillator device 30 connected to at least one oscillating arm 32 connected to the translating base 18 by means of a sliding coupling element.

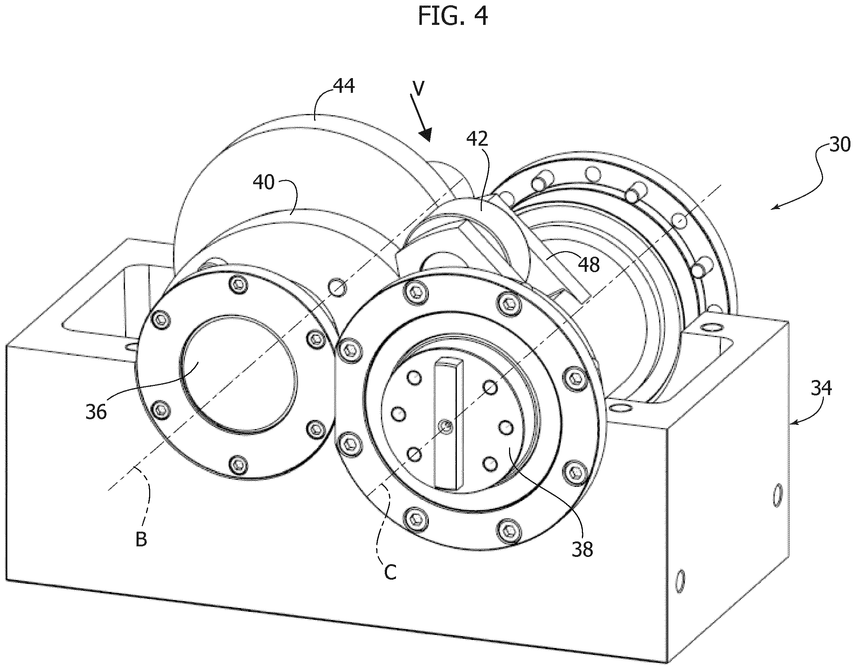

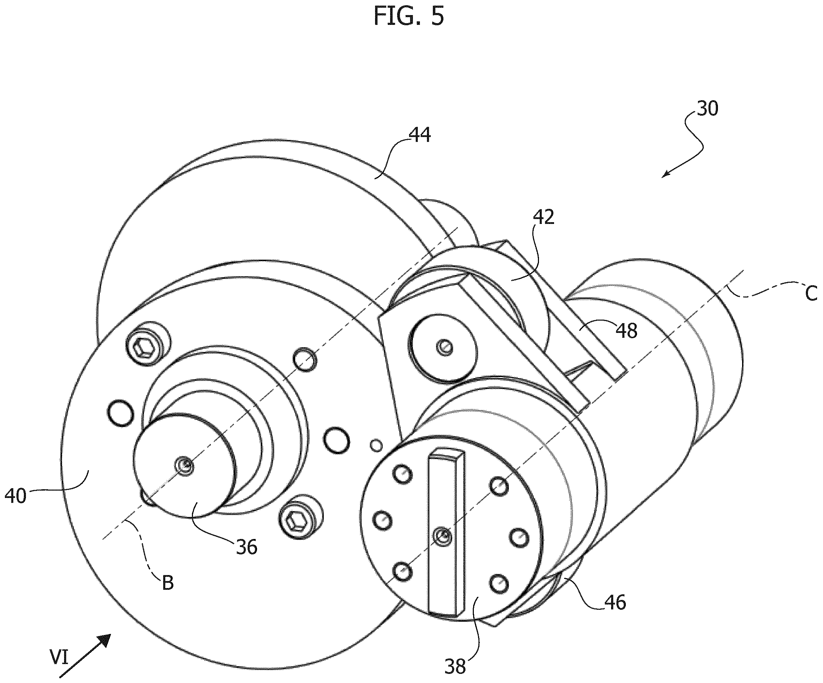

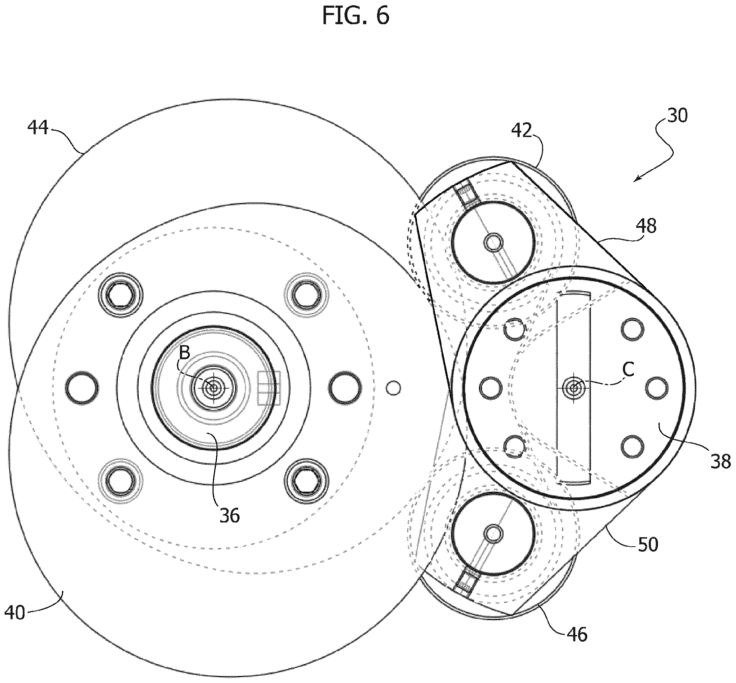

With reference to Figures 4-6, the cam oscillator device 30 comprises a casing 34 (Figure 4) in which an inlet shaft 36 and an outlet shaft 38 are housed, rotatable, respectively, around a first axis B and a second axis C parallel to each other.

The inlet shaft 36 is connected to an electric motor (not illustrated) and, during operation, is driven in rotation at a constant speed and always in the same direction of rotation. At least one cam 40 is fixed on the inlet shaft 36, which cooperates with at least one cam-follower 42 carried by the outlet shaft 38. In the embodiment illustrated in the figures, the oscillator device 30 comprises two cams 40, 44 with conjugated profiles fixed on the inlet shaft 36 and cooperating with respective cam-follower members 42, 46 carried by the outlet shaft 38. The cam-follower members 42, 46 may consist of idle rollers carried by respective flanges 48, 50 fixed to the outlet shaft 38.

In principle, the oscillator device 30 could comprise a single cam 40 or 44, and a single cam-follower member 42 or 46 pressed in contact with the respective cam 40 or 44 by a spring.

The profile of the cams 40, 44 is configured to convert the continuous rotary movement of the inlet shaft 36 into an alternating pivoting movement of the outlet shaft 38 around the second axis C with a predetermined law of motion.

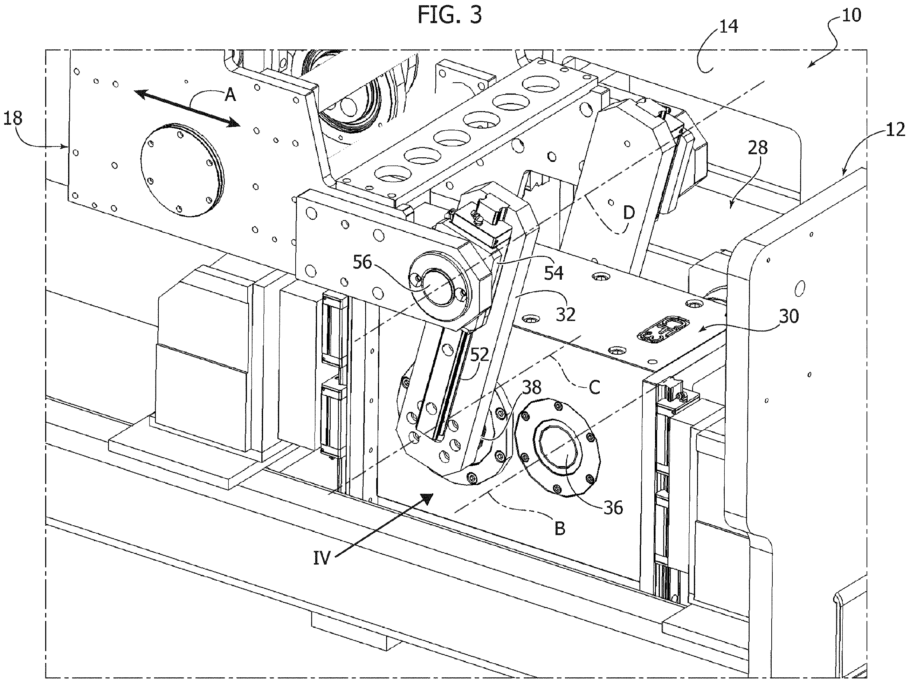

With reference to Figure 3, in a possible embodiment, the transmission mechanism 28 comprises two oscillating arms 32 parallel to each other, fixed to opposite ends of the outlet shaft 38, and connected to the translating base 18 by means of respective sliding coupling elements.

In a possible embodiment, each of the two pivoting arms 32 has a guide 52, which extends orthogonally to the axis C of the outlet shaft 38, and carries a respective shoe 54 which engages the respective guide 52 in a sliding manner. The two shoes 54 are articulated at the translating base 18 around a third axis D parallel to the second axis C, and orthogonal to the straight direction A. Articulation of the shoes 54 at the translating base 18 may be carried out by means of respective bearings 56. In a possible alternative embodiment, each pivoting arm 32 could have a guide slot orthogonal to the C axis within which a pin fixed to the translating base 18 slides.

During operation, the cam oscillator device 30 converts the continuous and unidirectional rotary motion of the inlet shaft 36 around the first axis B into an alternating pivoting motion of the outlet shaft 38 around the second axis C, which involves an alternating pivoting motion of the pivoting arms 32 around the same second axis C. Since the translating base 18 is constrained to move along the straight direction A, the shoes 54, slidably engaged on the respective guides 52 and articulated to the translating base 18 around the third axis D, convert the reciprocating pivoting movement of the pivoting arms 32 into an alternating straight movement of the translating base 18 along the direction A.

Transmission of the movement to the translating base 18 by means of the shoes 54 sliding along the pivoting arms 32 allows obtainment of an absolutely constant speed of the translating base 18, and free of perturbations in most of the stroke of the translating base 18, with the sole exception of the end portions of the stroke, in which the inversion of the motion takes place. The speed of the translating base 18 is kept absolutely constant and free of perturbation during the period wherein the welding elements 24, 26 are in the closed position. This allows considerable improvement of the quality of the weld.

Another particularly advantageous characteristic of the transmission mechanism 28 is the possibility of very quickly adjusting the amplitude of the stroke of the translating base 18 along the direction A. This adjustment is necessary when the format of the products to be packaged changes, in particular when the length of products in the direction A changes.

It can be noted that in the transmission mechanism 28 the amplitude of the stroke of the translating base 18 in the direction A is proportional to the distance between the second axis C and the third axis D. To vary the amplitude of the stroke of the translating base 18 along the direction A, it is therefore sufficient to vary the distance between the second axis C and the third axis D.

In a possible embodiment, the adjustment of the amplitude of the stroke of the translating base 18 may be carried out by adjusting the position of the oscillating cam device 30 with respect to the stationary base 12 in the vertical direction. With reference to Figure 1, the transmission mechanism 28 may comprise two actuators 58, which allow adjustment of the position in the vertical direction of the oscillating cam device 30 with respect to the stationary base 12 in the vertical direction. The actuators 58 may be electrically or pneumatically operated. In a possible embodiment, the actuators may be manually operated.

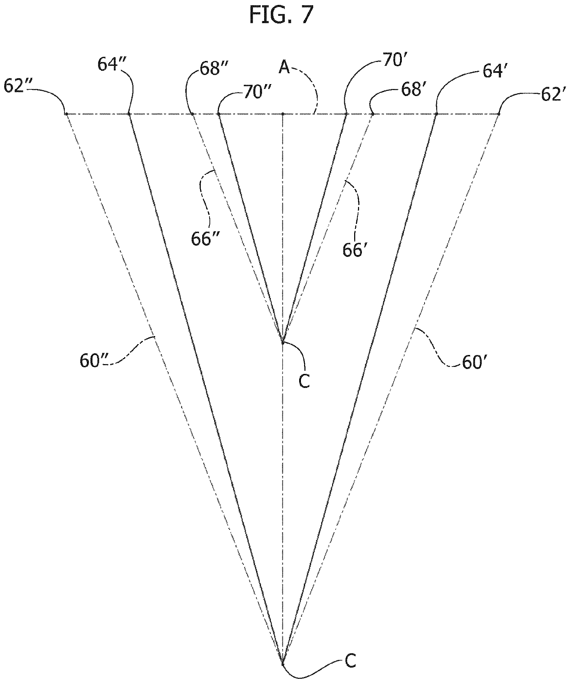

With reference to Figure 7, the line A indicates the direction along which the translating base 18 is mobile. The lines 60' 60" indicate the extreme positions of the pivoting arms 32 in the fully lowered position of the oscillating cam device 30, which corresponds to the maximum amplitude stroke of the translating base 18. Points 62', 62" indicate the extreme points of the stroke of the translating base 18 in the condition of maximum stroke. The points 64', 64" indicate the points between which the speed of the translating base 18 has a constant speed without perturbations in the maximum stroke condition. The speed constancy of the translating base 18 may be guaranteed only in the forward stroke (when the welding elements 24, 26 are in the closed position). In the return stroke, the constant speed of the translating base 18 may not be ensured.

The lines 66', 66" indicate the extreme positions of the pivoting arms 32 in the fully raised position of the cam oscillator device 30, which corresponds to the minimum amplitude stroke of the translating base 18. Points 68', 68" indicate the extreme points of the stroke of the translating base 18 in the condition of minimum stroke. The points 70', 70" indicate the points between which the speed of the translating base 18 has a constant speed without perturbations in the minimum stroke condition. In this case as well, the constancy of the speed of the translating base 18 may be guaranteed only in the forward stroke.

The oscillating cam device 30 may be arranged in any position between the completely lowered position and the completely raised position, so that it is possible to adjust the transmission mechanism 28 so as to obtain a stroke of the translating base 28 having any dimension included between the minimum stroke 68'-68" and the maximum stroke 62'-62".

Of course, without prejudice to the principle of the invention, the details of construction and the embodiments can be widely varied with respect to those described and illustrated, without thereby departing from the scope of the invention as defined by the claims that follow.

## Claims

1. A transverse welding assembly for a flow-pack packaging machine comprising:
- a stationary support structure (12),
- a translating base (18) movable with respect to the stationary support structure (12) along a straight direction (A),
- a transmission mechanism (28) configured to command a reciprocating movement of the translating base (18) along said straight direction (A) between a rear position and an advanced position and vice versa, and
- first and second welding elements (24, 26), carried by the translating base (18), and movable with respect to each other between an open position and a closed position in phase with the movement of the translating base (18),
**characterized in that** said transmission mechanism (28) comprises:
- a cam oscillator device (30), comprising an inlet shaft (36) rotatable around a first axis (B) and connected to an electric motor, at least one cam (40) fixed to said inlet shaft (36), an outlet shaft (38) oscillating around a second axis (C) parallel to said first axis (B), and at least one cam-follower member (42) carried by the outlet shaft (38) and cooperating with said at least one cam (40), wherein said cam (40) has a profile configured to convert a continuous rotary movement of the inlet shaft (36) into an alternating pivoting movement of the outlet shaft (38) around said second axis (C), and
- at least one pivoting arm (32) fixed to the outlet shaft (38) of the cam oscillator device (30) and connected to the translating base (18) by means of a sliding coupling element (54).

2. The welding assembly of claim 1, wherein the position of said oscillating cam device (30) with respect to the stationary support structure (12) is adjustable in a vertical direction to adjust the stroke of the reciprocating movement of the translating base (18) along said straight direction (A).

3. The welding assembly of claim 2, comprising a pair of actuators (58) arranged to adjust the position of said cam oscillator device (30) with respect to the stationary support structure (12) in the vertical direction.

4. The welding assembly according to any one of the preceding claims, wherein said sliding coupling element is a shoe (54) which slidably engages a guide (52) fixed with respect to the oscillating arm (32) and extending along a direction orthogonal to said second axis (C).

5. The welding assembly of claim 4, wherein said shoe (54) is articulated to the translating base (18) around a third axis (D) parallel to said second axis (C) and orthogonal to said straight direction (A).

6. The welding assembly according to any of the preceding claims, comprising two pivoting arms (32) parallel to each other and fixed to opposite ends of said outlet shaft (38) and cooperating with respective sliding coupling elements (54).

7. The welding assembly of claim 4, wherein said pivoting arms (32) carry respective shoes (54) articulated to the translating base (18) around a common axis (D) orthogonal to said straight direction (A).

8. The welding assembly according to any of the preceding claims, wherein said cam oscillator device (30) comprises a pair of cams (40, 44) with conjugate profiles fixed on the inlet shaft (36) and cooperating with respective cam-follower members (42, 46) carried by the outlet shaft (38).

9. The welding assembly according to any of the preceding claims, wherein said translating base (18) is slidably mounted along a pair of guides (20) carried by an adjustment plate (22), which is adjustable in a vertical direction with respect to said stationary support structure (12).

10. A horizontal flow-pack packaging machine comprising a transverse welding assembly (10) according to any of the preceding claims.

## Patentansprüche

1. Querschweißanordnung für eine Schlauchbeutelverpackungsmaschine, die Folgendes umfasst:
- eine ortsfeste Tragstruktur (12),
- eine translatorische Basis (18), die bezüglich der ortsfesten Tragstruktur (12) entlang einer geraden Richtung (A) bewegbar ist,
- einen Übertragungsmechanismus (28), der so eingerichtet ist, dass er eine Hin- und Herbewegung der translatorischen Basis (18) entlang der geraden Richtung (A) zwischen einer hinteren Stellung und einer vorderen Stellung und umgekehrt veranlasst, und
- ein erstes und ein zweites Schweißelement (24, 26), die von der translatorischen Basis (18) getragen sind und relativ zueinander zwischen einer offenen Stellung und einer geschlossenen Stellung in Phase mit der Bewegung der translatorischen Basis (18) bewegbar sind,
**dadurch gekennzeichnet, dass** der Übertragungsmechanismus (28) Folgendes umfasst:
- eine Kurvenscheibenschwingvorrichtung (30), die eine um eine erste Achse (B) drehbare und mit einem Elektromotor verbundene Einlasswelle (36), wenigstens eine an der Einlasswelle (36) befestigte Kurvenscheibe (40), eine um eine zur ersten Achse (B) parallele zweite Achse (C) schwingende Auslasswelle (38) und wenigstens ein Kurvenfolgerelement (42) umfasst, das von der Auslasswelle (38) getragen ist und mit der wenigstens einen Kurvenscheibe (40) zusammenwirkt, wobei die Kurvenscheibe (40) ein Profil aufweist, das so gestaltet ist, dass es eine kontinuierliche Drehbewegung der Einlasswelle (36) in eine alternierende Schwenkbewegung der Auslasswelle (38) um die zweite Achse (C) umwandelt, und
- wenigstens einen Schwenkarm (32), der an der Auslasswelle (38) der Kurvenscheibenschwingvorrichtung (30) befestigt und mittels eines Schiebekupplungselements (54) mit der translatorischen Basis (18) verbunden ist.

2. Schweißanordnung nach Anspruch 1, bei der die Stellung der Schwingkurvenscheibenvorrichtung (30) bezüglich der ortsfesten Tragstruktur (12) in einer vertikalen Richtung einstellbar ist, um den Hub der Hin- und Herbewegung der translatorischen Basis (18) entlang der geraden Richtung (A) einzustellen.

3. Schweißanordnung nach Anspruch 2, die ein Paar Stellantriebe (58) umfasst, die so angeordnet sind, dass sie die Stellung der Kurvenscheibenschwingvorrichtung (30) bezüglich der ortsfesten Tragstruktur (12) in vertikaler Richtung einstellen.

4. Schweißanordnung nach einem der vorhergehenden Ansprüche, bei der das Schiebekupplungselement ein Gleitstück (54) ist, das verschiebbar an einer Führung (52) angreift, die bezüglich des Schwingarms (32) befestigt ist und sich entlang einer zur zweiten Achse (C) orthogonalen Richtung erstreckt.

5. Schweißanordnung nach Anspruch 4, bei der das Gleitstück (54) um eine dritte Achse (D), die zu der zweiten Achse (C) parallel und zu der geraden Richtung (A) orthogonal ist, gelenkig an der translatorischen Basis (18) gelagert ist.

6. Schweißanordnung nach einem der vorhergehenden Ansprüche, die zwei zueinander parallele Schwenkarme (32) umfasst, die an entgegengesetzten Enden der Auslasswelle (38) befestigt sind und mit jeweiligen Schiebekupplungselementen (54) zusammenwirken.

7. Schweißanordnung nach Anspruch 4, bei der die Schwenkarme (32) jeweilige Gleitstücke (54) tragen, die um eine zur geraden Richtung (A) orthogonale, gemeinsame Achse (D) gelenkig an der translatorischen Basis (18) gelagert sind.

8. Schweißanordnung nach einem der vorhergehenden Ansprüche, bei der die Kurvenscheibenschwingvorrichtung (30) ein Paar Kurvenscheiben (40, 44) mit konjugierten Profilen umfasst, die an der Einlasswelle (36) befestigt sind und mit entsprechenden von der Auslasswelle (38) getragenen Kurvenfolgerelementen (42, 46) zusammenwirken.

9. Schweißanordnung nach einem der vorhergehenden Ansprüche, bei der die translatorische Basis (18) längs eines Paares Führungen (20) verschiebbar gelagert ist, die von einer Einstellplatte (22) getragen sind, die bezüglich der ortsfesten Tragstruktur (12) in einer vertikalen Richtung einstellbar ist.

10. Horizontalschlauchbeutelverpackungsmaschine, die eine Querschweißanordnung (10) nach einem der vorhergehenden Ansprüche umfasst.

## Revendications

1. Ensemble de soudage transversal pour une machine d'emballage de sacs thermo-soudés comprenant :
- une structure de support fixe (12),
- une base de translation (18) mobile par rapport à la structure de support fixe (12) le long d'une direction rectiligne (A),
- un mécanisme de transmission (28) configuré pour commander un mouvement alternatif de la base de translation (18) le long de ladite direction rectiligne (A) entre une position arrière et une position avancée et vice versa, et
- des premier et second éléments de soudage (24, 26), portés par la base de translation (18), et mobiles l'un par rapport à l'autre entre une position ouverte et une position fermée en phase avec le mouvement de la base de translation (18),
**caractérisé en ce que** ledit mécanisme de transmission (28) comprend :
- un dispositif oscillateur à came (30), comprenant un arbre d'entrée (36) rotatif autour d'un premier axe (B) et relié à un moteur électrique, au moins une came (40) fixée audit arbre d'entrée (36), un arbre de sortie (38) oscillant autour d'un deuxième axe (C) parallèle audit premier axe (B), et au moins un organe suiveur de came (42) porté par l'arbre de sortie (38) et coopérant avec ladite au moins une came (40), dans lequel ladite came (40) présente un profil configuré pour convertir un mouvement de rotation continu de l'arbre d'entrée (36) en un mouvement de pivotement alterné de l'arbre de sortie (38) autour dudit deuxième axe (C), et
- au moins un bras pivotant (32) fixé à l'arbre de sortie (38) du dispositif oscillateur à came (30) et relié à la base de translation (18) au moyen d'un élément de couplage coulissant (54).

2. Ensemble de soudage de la revendication 1, dans lequel la position dudit dispositif oscillateur à came (30) par rapport à la structure de support fixe (12) est réglable dans une direction verticale pour régler la course du mouvement alternatif de la base de translation (18) le long de ladite direction rectiligne (A).

3. Ensemble de soudage de la revendication 2, comprenant une paire d'actionneurs (58) agencés pour régler la position dudit dispositif oscillateur à came (30) par rapport à la structure de support fixe (12) dans la direction verticale.

4. Ensemble de soudage selon l'une quelconque des revendications précédentes, dans lequel ledit élément de couplage coulissant est un patin (54) qui s'engage de manière coulissante avec un guide (52) fixé par rapport au bras oscillant (32) et s'étendant le long d'une direction orthogonale audit deuxième axe (C).

5. Ensemble de soudage de la revendication 4, dans lequel ledit patin (54) est articulé sur la base de translation (18) autour d'un troisième axe (D) parallèle audit deuxième axe (C) et orthogonal à ladite direction rectiligne (A).

6. Ensemble de soudage selon l'une des revendications précédentes, comprenant deux bras pivotants (32) parallèles l'un à l'autre et fixés à des extrémités opposées dudit arbre de sortie (38) et coopérant avec des éléments de couplage coulissants (54) respectifs.

7. Ensemble de soudage de la revendication 4, dans lequel lesdits bras pivotants (32) portent des patins (54) respectifs articulés sur la base de translation (18) autour d'un axe commun (D) orthogonal à ladite direction rectiligne (A).

8. Ensemble de soudage selon l'une des revendications précédentes, dans lequel ledit dispositif oscillateur à came (30) comprend une paire de cames (40, 44) à profils conjugués fixées sur l'arbre d'entrée (36) et coopérant avec des organes suiveurs de came (42, 46) respectifs portés par l'arbre de sortie (38).

9. Ensemble de soudage selon l'une des revendications précédentes, dans lequel ladite base de translation (18) est montée de manière coulissante le long d'une paire de guides (20) portés par une plaque de réglage (22), qui est réglable dans une direction verticale par rapport à ladite structure de support fixe (12).

10. Machine d'emballage de sacs thermo-soudés horizontale comprenant un ensemble de soudage transversal (10) selon l'une des revendications précédentes.
